# EUROPEAN PATENT APPLICATION

(11) **EP 3 989 426 A1**
(43) Date of publication of application: **27.04.2022**
(21) Application number: 21179879.8
(22) Date of filing: 16.06.2021
(51) Int. Cl.: H02M 3/335, H02M 1/32, H02M 1/00, H02H 3/04

(54) **POWER SUPPLY APPARATUS WITH LIMITED POWER SOURCE CAPABILITY AND METHOD OF CONTROLLING THE SAME**

(30) Priority: 26.10.2020 CN 202011154194
(71) Applicant: Delta Electronics Inc., Taoyuan City 320023 (TW)
(72) Inventor: LIN, Cheng-Yi, 320023 Taoyuan City (TW); HUANG, Yu-Lun, 320023 Taoyuan City (TW)
(74) Representative: 2K Patentanwälte Blasberg Kewitz & Reichel

(57) **Abstract**

A power supply apparatus with limited power source capability includes a power path (P_{O}), a current sensing resistor (R_{CS}), a control unit (CON_{PD}), and a switch (Q_{P}). The power path (P_{O}) is coupled between a transformer (T_{R}) and an output port (S_{O}) of the power supply apparatus. The current sensing resistor (R_{CS}) is disposed on the power path (P_{O}). The control unit (CON_{PD}) is coupled to the current sensing resistor (R_{CS}). The switch (Q_{P}) is disposed on the power path (P_{O}). When the control unit (CON_{PD}) determines that a sense voltage (V_{RCS}) of the current sensing resistor (R_{CS}) is less than a first threshold value (V_{TH1}) and a signal voltage (V_{IC1}) of the control unit (CON_{PD}) is greater than a second threshold value (V_{TH2}), the control unit (CON_{PD}) turns off the switch (Q_{P}).

## Description

### BACKGROUND

### Technical Field

The present disclosure relates to a power supply apparatus and a method of controlling the same, and more particularly to a power supply apparatus with limited power source capability and a method of controlling the same.

### Description of Related Art

The statements in this section merely provide background information related to the present disclosure and do not necessarily constitute prior art.

In the safety standards of information technology (IT) equipment IEC/EN/UL 60950-1-2, limited power source (LPS) related requirements are specified for power products, such as power supplies and power adapters. In accordance with general safety requirements of these standards, IT equipment shall have a fireproof enclosure to prevent serious damages when a fire hazard occurs. However, if the main power of the IT equipment system is supplied by power supplies complying with the LPS standards, which means the output voltage, output current, and apparent power provided by the power supplies can meet the specified values in the Table 2B/2C of UL 60950-1-2, the IT equipment does not need a fireproof enclosure with high fire rating, for example, enclosures with HB rating specified in the UL94 standard can be used. The HB rating enclosures have lower price, better physical characteristics, and can also easily meet environmental protection requirements. In addition, such safety requirements (specifications) can also be applied to power supply apparatuses (such as power adapters) with USB power delivery (USB PD) function.

For power supply apparatus designers, there may be two ways to design a power supply apparatus that meets the requirements of the LPS standards, one is to design an inherently limited power source (with inherent power delivery limits), and the other is to design a non-inherently limited power source (with non-inherent power delivery limits). In brief, in accordance with the standard IEC 60950-1-2, the output of an LPS standards compliant power supply apparatus with inherent power delivery limits shall not exceed 8A/100VA, as for a power supply apparatus with non-inherently power delivery limits and compliant with LPS standards, the current rating of its overcurrent protective devices, such as a fuse, shall not exceed 5A. For a power supply apparatus with output voltage less than 30 volts and without any overcurrent protection devices at its output port, if an output short-circuit single fault test is performed on the power supply apparatus, its output current shall not exceed 5A when its output voltage is 20V, and its total output power shall not exceed 100VA. If the abovementioned current limit or the power limit is exceeded, protection mechanisms such as output current limiting or shutdown (usually latch-up or auto-recovery) shall be activated so that the total output power does not exceed 100VA.

However, with the development of consumer electronic products and increasing power requirements, the normal output current rating or output power rating of power supply apparatuses with larger output power such as 90 to 96W may be very close to the limit value (8A or 100VA) specified in the LPS standards. If the power supply apparatuses need to meet the output power limit specification of the LPS standards and does not use overcurrent protective devices in consideration of cost reduction, there may be some problems such as it's difficult to design appropriate protection points of OCP (over current protection) or OPP (over power protection) functions since the protection points may be too close to the rated output, or the protections of some products may be more easily triggered than others since the protection points of the products may be slightly different due to the component tolerance. Therefore, it is generally difficult for such power supply apparatuses with larger output power to comply with the LPS standards and obtain the related certifications.

Accordingly, an important subject studied by inventors of the present disclosure is how to design a power supply apparatus with limited power source capability and a method of controlling the same to achieve precise overcurrent or overpower protections for the power supply apparatuses with larger output power by acquiring and determining node voltages related to the output power (output load) of the power supply apparatus, and controlling the power supply apparatus with simple circuit design to meet the LPS standards.

### SUMMARY

An object of the present disclosure is to provide a power supply apparatus with limited power source capability to solve the abovementioned problems of the existing technology.

In order to achieve the above-mentioned object, the power supply apparatus with limited power source capability includes a power path, a current sensing resistor, a control unit, and a switch. The power path is coupled between a transformer and an output port of the power supply apparatus. The current sensing resistor is disposed on the power path. The control unit is coupled to the current sensing resistor. The switch is disposed on the power path. When the control unit determines that a sense voltage of the current sensing resistor is less than a first threshold value and a signal voltage of the control unit is greater than a second threshold value, the control unit turns off the switch.

In one embodiment, when the control unit determines that the sense voltage is less than the first threshold value and the signal voltage is greater than the second threshold value for longer than a time threshold, the control unit turns off the switch.

In one embodiment, when the sense voltage is equal to 0 volt and the signal voltage is greater than the second threshold value, the control unit turns off the switch.

In one embodiment, the power supply apparatus with limited power source capability further includes a synchronous rectifying circuit. The synchronous rectifying circuit is coupled to the transformer and the switch. The signal voltage is a node voltage of the synchronous rectifying circuit.

In one embodiment, the synchronous rectifying circuit includes a rectifying control unit, a rectifier switch, and a capacitor. The rectifying control unit is coupled to a first end of a secondary side of the transformer and the switch. The rectifier switch is coupled to the first end, the rectifying control unit, and the switch, or coupled to a second end of the secondary side and the rectifying control unit. The capacitor is coupled to the first end and the rectifying control unit.

In one embodiment, the node voltage is a voltage of a node where the capacitor and the first end are connected.

In one embodiment, the node voltage is a voltage of a node where the capacitor and the rectifying control unit are connected.

In one embodiment, the second threshold value is 1.1 volts.

In one embodiment, the time threshold is 500 milliseconds.

In one embodiment, the power supply apparatus has a function of a USB power delivery (USB PD).

Therefore, the power supply apparatus with limited power source capability is provided to simply circuit design and realize the precise limitation and protection of the output power of the power supply apparatus with larger output power to meet the standard specifications by acquiring and determining node voltages related to the output power (output load) of the power supply apparatus, and controlling the power supply apparatus.

Another object of the present disclosure is to provide a method of controlling a power supply apparatus with limited power source capability to solve the problems of the existing technology.

In order to achieve the above-mentioned object, a power path provided between an output port of the power supply apparatus and a transformer, wherein the power supply apparatus includes a current sensing resistor, a control unit, and a switch disposed on the power path. The method includes steps of: comparing a sense voltage of the current sensing resistor with a first threshold value under a normal load operation, comparing a signal voltage of the control unit with a second threshold value, and turning off the switch when the sense voltage is less than the first threshold value and the signal voltage is greater than the second threshold value.

In one embodiment, before "turning off the switch" further comprising steps of: determining whether the sense voltage is less than the first threshold value and the signal voltage is greater than the second threshold value for longer than a time threshold, and turning off the switch when the sense voltage is less than the first threshold value and the signal voltage is greater than the second threshold for longer the time threshold.

In one embodiment, when the sense voltage is equal to 0 volt and the signal voltage is greater than the second threshold value, the control unit turns off the switch.

In one embodiment, the second threshold value is 1.1 volts.

In one embodiment, the time threshold is 500 milliseconds.

Therefore, the method of controlling the power supply apparatus with limited power source capability is provided to achieve precise overcurrent or overpower protections for the power supply apparatuses with larger output power by acquiring and determining node voltages related to the output power (output load) of the power supply apparatus, and controlling the power supply apparatus with simple circuit design to meet the LPS standards.

It is to be understood that both the foregoing general description and the following detailed description are exemplary, and are intended to provide further explanation of the present disclosure as claimed. Other advantages and features of the present disclosure will be apparent from the following description, drawings and claims.

### BRIEF DESCRIPTION OF DRAWINGS

The present disclosure can be more fully understood by reading the following detailed description of the embodiment, with reference made to the accompanying drawings as follows:
FIG. 1 is a circuit block diagram of an exemplary power supply apparatus with limited power source capability according to the present disclosure.
FIG. 2 is a circuit diagram of the exemplary power supply apparatus with limited power source capability according to the present disclosure.
FIG. 3 is a flowchart of an exemplary method of controlling a power supply apparatus with limited power source capability according to a first embodiment of the present disclosure.
FIG. 4 is a flowchart of an exemplary method of controlling a power supply apparatus with limited power source capability according to a second embodiment of the present disclosure.

### DETAILED DESCRIPTION

Reference will now be made to the drawing figures to describe the present disclosure in detail. It will be understood that the drawing figures and exemplified embodiments of present disclosure are not limited to the details thereof.

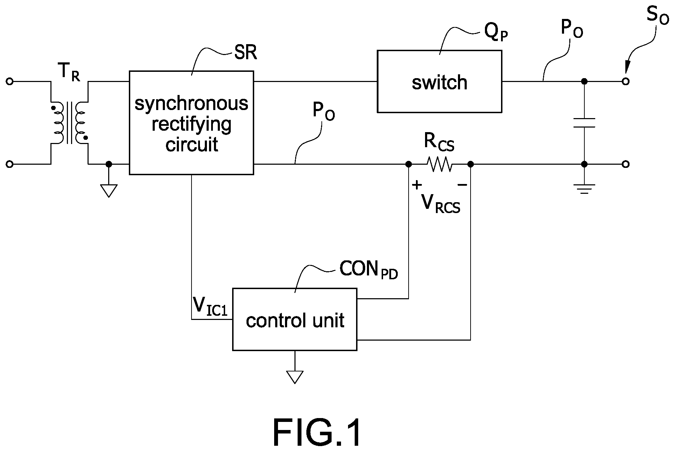

FIG. 1 illustrates a circuit block diagram of a power supply apparatus with limited power source capability according to the present disclosure. The power supply apparatus with limited power source capability (hereinafter "power supply apparatus") includes a power path Pₒ, a current sensing resistor R_{CS}, a control unit CON_{PD}, and a switch Qp. The power path Pₒ is coupled between a transformer T_{R} and an output port So of the power supply apparatus. As shown in FIG. 1, the power path P_{O} is a path for delivering power from the secondary side of the transformer T_{R} to the output port So of the power supply apparatus. In the present disclosure, the power supply apparatus has a function of USB power delivery (USB PD). Therefore, the control unit CON_{PD} is a USB PD (power delivery) controller, and the communication, feedback control, protection control, and/or other functions can be performed by the control unit CON_{PD}.

The current sensing resistor R_{CS} is disposed on the power path P_{O}. The control unit CON_{PD} is coupled to the current sensing resistor R_{CS}. The switch Q_{P} is disposed on the power path P_{O} to provide a protection function by turning off the switch Q_{P}. By turning on or turning off the switch Q_{P}, the power supply apparatus can output power or not. That is, when the switch Q_{P} is turned on, the power supply apparatus outputs power through the power path Pₒ to the output port So; when the switch Qp is turned off, the power supply apparatus does not output power.

Specifically, when the control unit CON_{PD} determines that a sense voltage V_{RCS} of the current sensing resistor R_{CS} is less than a first threshold value V_{TH1} and a signal voltage V_{IC1} of the control unit CON_{PD} is greater than a second threshold value V_{TH2}, the control unit CON_{PD} turns off the switch Q_{P} so that no power will be outputted from the power supply apparatus. The second threshold value V_{TH2}is, for example but not limited to, 1.1 volts. The sense voltage V_{RCS} is generated when a current flows through the current sensing resistor R_{CS}, so the sense voltage V_{RCS} indicates the magnitude of the current flowing through the current sensing resistor R_{CS} if the resistance of the current sensing resistor R_{CS} is fixed. That is, the greater the sense voltage V_{RCS}, the greater the current flowing through the current sensing resistor R_{CS}; the smaller the sense voltage V_{RCS}, the smaller the current flowing through the current sensing resistor R_{CS}. Therefore, if the sense voltage V_{RCS} is less than the first threshold value V_{TH1}, it may mean that the power supply apparatus does not output power at the moment, or circuits related to the current sensing resistor R_{CS} are abnormal, for example, a short-circuit condition occurs on the current sensing resistor R_{CS}, or the power supply apparatus is in a short-circuit protection test or an LPS test.

Moreover, the magnitude of the signal voltage V_{IC1} is related to the output power (output load) of the power supply apparatus, so the greater the signal voltage V_{IC1}, the greater the output power of the power supply apparatus; the smaller the signal voltage V_{IC1}, the smaller the output power of the power supply apparatus. The control unit CON_{PD} simultaneously determines whether the sense voltage V_{RCS} of the current sensing resistor R_{CS} is less than the first threshold value V_{TH1} and the signal voltage V_{IC1} is greater than the second threshold value V_{TH2}, and if both conditions are met, the control unit CON_{PD} determines that the current sensing resistor R_{CS} of the power supply apparatus may be short-circuited but the power supply apparatus still continuously outputs current to the load. In other words, the power supply apparatus may be in the short-circuit protection test or the LPS test, and therefore the control unit CON_{PD} immediately turns off the switch Qp so that no power will be outputted from the power supply apparatus.

In another embodiment, one condition that the control unit CON_{PD} determines that the sense voltage V_{RCS} is less than the first threshold value V_{TH1} may be a condition that the sense voltage V_{RCS} is equal to 0 volt. Therefore, when the sense voltage V_{RCS} is equal to 0 volt and the signal voltage V_{IC1} is greater than the second threshold value V_{TH2}, the control unit CON_{PD} turns off the switch Q_{P} so that no power will be outputted from the power supply apparatus.

Another embodiment of the present disclosure includes that the control unit CON_{PD} further determines a time condition. Specifically, when the control unit CON_{PD} determines that the sense voltage V_{RCS} is less than the first threshold value V_{TH1} and the signal voltage V_{IC1} is greater than the second threshold value V_{TH2} for longer than a time threshold T_{TH}, the control unit CON_{PD} turns off the switch Q_{P} so that no power will be outputted from the power supply apparatus. In one embodiment, the time threshold T_{TH} is, for example but not limited to, 500 milliseconds. Therefore, the time condition is introduced to avoid false triggering of the protection mechanism of turning off the switch Qp if both the voltage conditions are met due to transient abnormal (unexpected) circuit operations.

As shown in FIG. 1, the power supply apparatus further includes a synchronous rectifying circuit SR. The synchronous rectifying circuit SR is coupled to the transformer T_{R} and the switch Q_{P}. The signal voltage V_{IC1} is a node voltage of the synchronous rectifying circuit SR.

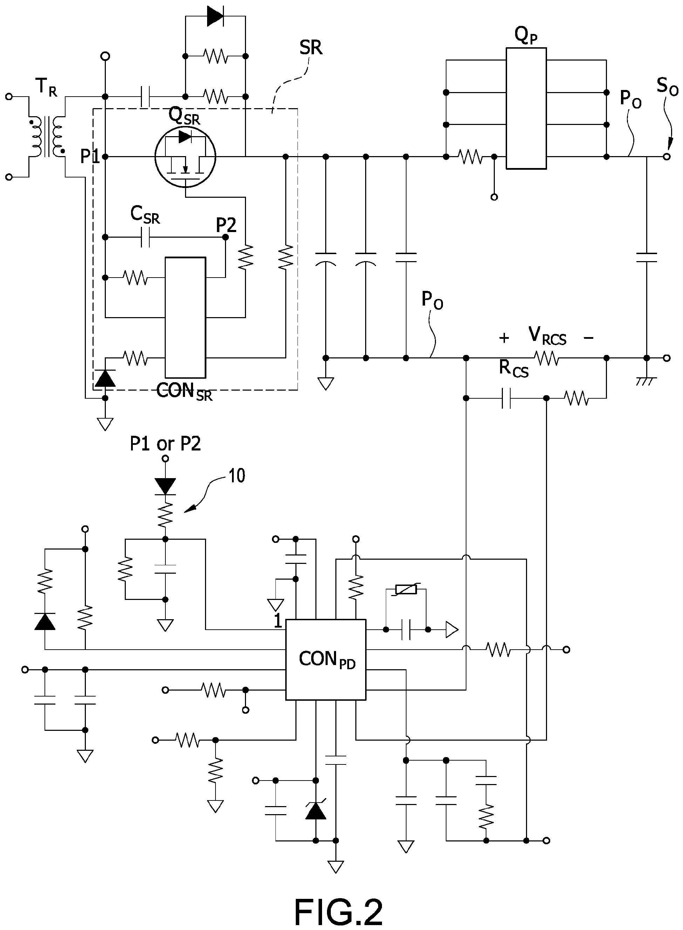

FIG. 2 illustrates a circuit diagram of the exemplary power supply apparatus with limited power source capability according to the present disclosure. The synchronous rectifying circuit SR includes a rectifying control unit, a rectifier switch, and a capacitor. The synchronous rectifying circuit SR is provided to convert an AC voltage into a DC voltage for the output of the power supply apparatus. The rectifying control unit CON_{SR} is coupled to a non-grounding end of the secondary side of the transformer T_{R} and the switch Q_{P}. The rectifier switch Q_{SR} is coupled to the non-grounding end, the rectifying control unit CON_{SR}, and the switch Q_{P}. The capacitor C_{SR} is coupled to the non-grounding end and the rectifying control unit CON_{SR}.

In one embodiment, the signal voltage V_{IC1} is a voltage of a node where the switch Q_{SR}, the capacitor C_{SR}, and the non-grounding end are commonly connected, i.e., a node voltage of a first node P1 shown in FIG. 2. Therefore, when the control unit CON_{PD} determines that the sense voltage V_{RCS} is less than the first threshold value V_{TH1} and the signal voltage V_{IC1} (i.e., the node voltage of the first node PI) is greater than the second threshold value V_{TH2}, the control unit CON_{PD} turns off the switch Q_{P} so that no power will be outputted from the power supply apparatus. Specifically, the node voltage of the first node P1 is adjusted to a voltage level suitable for the operation of the control unit CON_{PD} by an adjustment circuit 10 with rectification and voltage division functions. Therefore, the adjusted voltage level is provided to the control unit CON_{PD}, such as a first pin of the control unit CON_{PD} shown in FIG. 1.

In one embodiment, the signal voltage V_{IC1} is a voltage of a node where the capacitor C_{SR} and the rectifying control unit CON_{SR} are connected, i.e., a node voltage of a second node P2 shown in FIG. 2. Therefore, when the control unit CON_{PD} determines that the sense voltage V_{RCS} is less than the first threshold value V_{TH1} and the signal voltage V_{IC1} (i.e., the node voltage of the second node P2) is greater than the second threshold value V_{TH2}, the control unit CON_{PD} turns off the switch Q_{P} so that no power will be outputted from the power supply apparatus. Specifically, the node voltage of the second node P2 is adjusted to a voltage level suitable for the operation of the control unit CON_{PD} by an adjustment circuit 10 with rectification and voltage division functions. Therefore, the adjusted voltage level is provided to the control unit CON_{PD}, such as a first pin of the control unit CON_{PD} shown in FIG. 1.

However, it is not limited to detecting the node voltage of the first node P1 or the second node P2 for the control unit CON_{PD} to determine if the signal voltage V_{IC1} is less than the first threshold value V_{TH1}. A node voltage of any node in the synchronous rectifying circuit SR that varies with the output current can be used.

In particular, the rectifier switch Q_{SR} of the synchronous rectifying circuit SR is not limited to be arranged at the high side of the secondary side circuit, i.e., a current output side of the secondary side circuit shown in FIG. 2, that is, the rectifier switch Q_{SR} may be arranged at the low side, i.e., a current return side. Therefore, whether the switch Q_{SR} is arranged at the high side or the low side, it is suitable for the abovementioned controls of the power supply apparatus with limited power source capability.

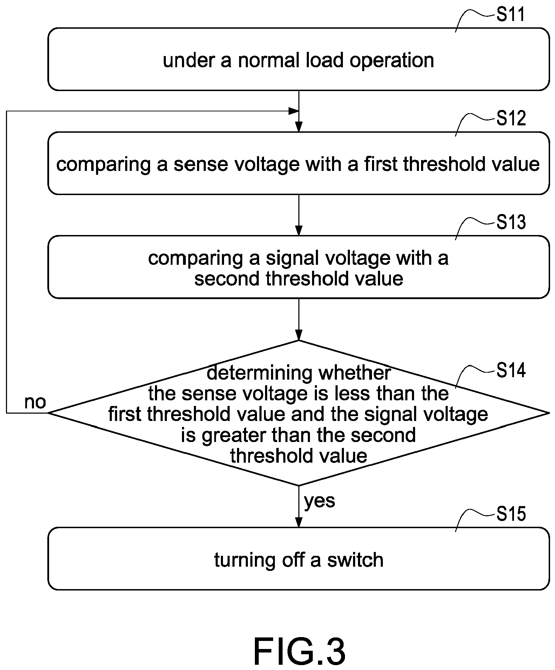

FIG. 3 illustrates a flowchart of an exemplary method of controlling a power supply apparatus with limited power source capability according to a first embodiment of the present disclosure. A power path Pₒ between an output port So of the power supply apparatus and a transformer is provided. The power supply apparatus includes a current sensing resistor Res, a control unit CON_{PD}, and a switch Qp. The method includes the following steps. First, under a normal load operation (S11), comparing a sense voltage V_{RCS} of the current sensing resistor R_{CS} with a first threshold value V_{TH1} (S12). Afterward, comparing a signal voltage V_{IC1} of the control unit CON_{PD} with a second threshold value V_{TH2} (S13). Afterward, determining whether the sense voltage V_{RCS} is less than the first threshold value V_{TH1} and the signal voltage V_{IC1} is greater than the second threshold value V_{TH2} (S14). Finally, turning off the switch Qp (S15) when the sense voltage V_{RCS} is less than the first threshold value V_{TH1} and the signal voltage V_{IC1} is greater than the second threshold value V_{TH2}.

In another embodiment, one condition that determining that the sense voltage V_{RCS} is less than the first threshold value V_{TH1} may be a condition that the sense voltage V_{RCS} is equal to 0 volt. Therefore, turning off the switch Qp (S15) when the sense voltage V_{RCS} is equal to 0 volt and the signal voltage V_{IC1} is greater than the second threshold value V_{TH2} so that no power will be outputted from the power supply apparatus.

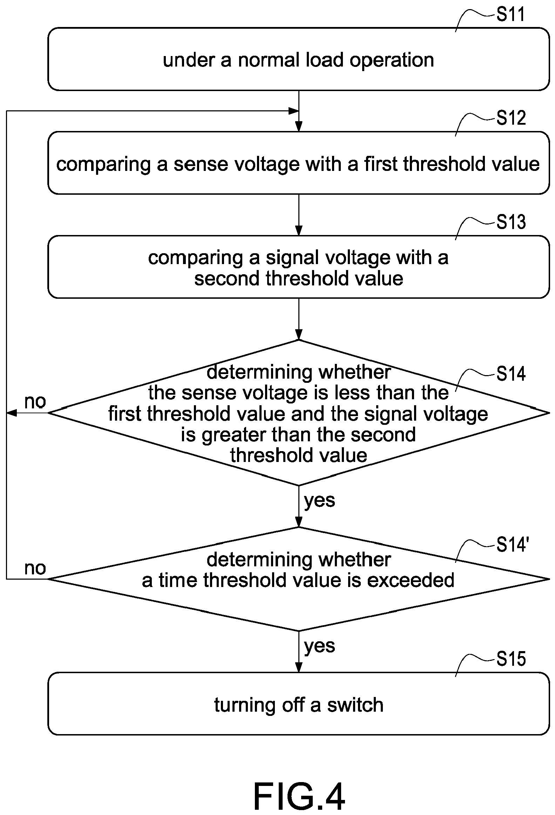

FIG. 4 illustrates a flowchart of another exemplary method of controlling a power supply apparatus with limited power source capability according to a second embodiment of the present disclosure. The major difference between the FIG. 4 and the FIG. 3 is that the former further includes determining a time condition after the step (S14), that is, determining whether the sense voltage V_{RCS} is less than the first threshold value V_{TH1} and the signal voltage V_{IC1} is greater than the second threshold value V_{TH2} for longer than a time threshold T_{TH} (S14'). If both the voltage conditions are met, that is, the result in the step (S14) is "YES" and the time condition is met, that is, the result in the step (S14') is "YES", the switch Qp is turned off (S15) so that no power will be outputted from the power supply apparatus. On the contrary, if one of the both voltage conditions is not met, that is, the result in the step (S14) is "NO", or the time condition is not met, that is, the result in the step (S14') is "NO", the step (S12) and the step (S13) are performed again.

Accordingly, the present disclosure provides the power supply apparatus with limited power source capability and the method of controlling the same to achieve precise overcurrent or overpower protections for the power supply apparatuses with larger output power by acquiring and determining node voltages related to the output power (output load) of the power supply apparatus, and controlling the power supply apparatus with simple circuit design to meet the LPS standards.

## Claims

1. A power supply apparatus with limited power source capability, **characterized in that** the power supply apparatus comprising:
a power path (P_{O}) coupled between a transformer (T_{R}) and an output port (S_{O}) of the power supply apparatus,
a current sensing resistor (R_{CS}) disposed on the power path (Po),
a control unit (CON_{PD}) coupled to the current sensing resistor (Res), and
a switch (Q_{P}) disposed on the power path (P_{O}),
wherein when the control unit (CON_{PD}) determines that a sense voltage (V_{RCS}) of the current sensing resistor (R_{CS}) is less than a first threshold value (V_{TH1}) and a signal voltage (V_{IC1}) of the control unit (CON_{PD}) is greater than a second threshold value (V_{TH2}), the control unit (CON_{PD}) turns off the switch (Q_{P}).

2. The power supply apparatus of claim 1, wherein when the control unit (CON_{PD}) determines that the sense voltage (V_{RCS}) is less than the first threshold value (V_{TH1}) and the signal voltage (Vici) is greater than the second threshold value (V_{TH2}) for longer than a time threshold (T_{TH}), the control unit (CON_{PD}) turns off the switch (Q_{P}).

3. The power supply apparatus of claim 1, wherein when the sense voltage (V_{RCS}) is equal to 0 volt and the signal voltage (V_{IC1}) is greater than the second threshold value (V_{TH2}), the control unit (CON_{PD}) turns off the switch (Q_{P}).

4. The power supply apparatus of claim 1, further comprising:
a synchronous rectifying circuit (SR) coupled to the transformer (T_{R}) and the switch (Q_{P}),
wherein the signal voltage (V_{IC1}) is a node voltage of the synchronous rectifying circuit (SR).

5. The power supply apparatus of claim 4, wherein the synchronous rectifying circuit (SR) comprises:
a rectifying control unit (CON_{SR}) coupled to a first end of a secondary side of the transformer (T_{R}) and the switch (Q_{P}),
a rectifier switch (Q_{SR}) coupled to the first end, the rectifying control unit (CON_{SR}), and the switch (Q_{P}),or coupled to a second end of the secondary side and the rectifying control unit (CON_{SR}), and
a capacitor (C_{SR}) coupled to the first end and the rectifying control unit (CON_{SR}).

6. The power supply apparatus of claim 5, wherein the signal voltage (V_{IC1}) is a voltage of a node (PI) where the capacitor (C_{SR}) and the first end are connected.

7. The power supply apparatus of claim 5, wherein the signal voltage (V_{IC1}) is a voltage of a node (P2) where the capacitor (C_{SR}) and the rectifying control unit (CON_{SR}) are connected.

8. The power supply apparatus of claim 1, wherein the second threshold value (V_{TH2}) is 1.1 volts.

9. The power supply apparatus of claim 2, wherein the time threshold (T_{TH}) is 500 milliseconds.

10. The power supply apparatus of claim 1, wherein the power supply apparatus has a function of a USB power delivery (USB PD).

11. A method of controlling a power supply apparatus with limited power source capability, **characterized in that** the method comprising steps of:
comparing a sense voltage (V_{RCS}) of a current sensing resistor (R_{CS}) of the power supply apparatus with a first threshold value (V_{TH1}), the current sensing resistor (R_{CS}) disposed on a power path (P_{O}) of the power supply apparatus,
comparing a signal voltage (V_{IC1}) provided by a synchronous rectifying circuit (SR) of the power supply apparatus with a second threshold value (V_{TH2}), and
turning off a switch (Q_{P}) disposed on the power path (P_{O}) when the sense voltage (V_{RCS}) is less than the first threshold value (V_{TH1}) and the signal voltage (V_{IC1}) is greater than the second threshold value (V_{TH2}).

12. The method of claim 11, wherein before "turning off the switch (Qp)", the method further comprises steps of:
determining whether the sense voltage (V_{RCS}) is less than the first threshold value (V_{TH1}) and the signal voltage (V_{IC1}) is greater than the second threshold value (V_{TH2}) for longer than a time threshold (T_{TH}), and
turning off the switch (Qp) when the sense voltage (V_{RCS}) is less than the first threshold value (V_{TH1}) and the signal voltage (V_{IC1}) is greater than the second threshold value (V_{TH2}) for longer than the time threshold (T_{TH}).

13. The method of claim 11, wherein the method further comprises: turning off the switch (Q_{P}) when determining that the sense voltage (V_{RCS}) is equal to 0 volt and the signal voltage (V_{IC1}) is greater than the second threshold value (V_{TH2}).

14. The method of claim 11, wherein the second threshold value (V_{TH2}) is 1.1 volts.

15. The method of claim 12, wherein the time threshold (T_{TH}) is 500 milliseconds.
